# FASCICULE DE BREVET EUROPEEN

(11) **EP 3 215 406 B1**
(45) Date de publication et mention de la délivrance du brevet: **29.08.2018**
(21) Numéro de dépôt: 15804883.5
(22) Date de dépôt: 05.11.2015
(51) Int. Cl.: B60W 10/26, B60W 30/18, B60W 20/12

(54) **PROCÉDÉ DE CONTRÔLE DE VÉHICULE HYBRIDE**
STEUERUNGSVERFAHREN FÜR HYBRIDFAHRZEUG
HYBRID VEHICLE CONTROL METHOD

(30) Priorité: 07.11.2014 FR 1460789
(43) Date de publication de la demande: 13.09.2017
(73) Titulaire: Valeo Systèmes de Contrôle Moteur, 95800 Cergy Saint Christophe (FR)
(72) Inventeur: ARNAIZ, Lionel, 95800 Cergy Saint Christophe (FR)
(74) Mandataire: Garcia, Christine
(86) Numéro de dépôt international: PCT/FR2015/052994
(87) Numéro de publication internationale: WO 2016/071642

(56) Documents cités:
- WO-A1-2013/167149
- WO-A2-2014/058383
- DE-A1-102012 013 689

## Description

La présente invention concerne la gestion d'un système d'entraînement d'un véhicule hybride comportant un moteur thermique et une machine électrique avec un moyen de stockage d'énergie.

Il est connu d'exploiter des informations liées à la topologie de la route parcourue par le véhicule, en cherchant à utiliser au mieux le relief de celle-ci comme source potentielle de récupération d'énergie.

Les stratégies connues de gestion énergétique adaptent le niveau d'énergie dans le moyen de stockage pour optimiser la récupération durant les situations de pente. Toutefois, une situation de route en descente n'est perçue dans ces stratégies comme une source potentielle d'énergie que si la pente est relativement importante.

WO 2014/058383 divulgue un procédé dans lequel la vitesse attendue sur un tronçon de route futur est calculée à l'aide d'un système de géolocalisation, de façon à déterminer si la future pente entrainera un freinage récupératif.

WO 2013/167149, qui représente l'art antérieur le plus proche, divulgue un procédé de gestion du système d'entraînement d'un véhicule hybride comportant un moteur thermique et une machine électrique avec un moyen de stockage d'énergie, le véhicule disposant d'informations sur la topologie d'un tronçon de route futur en descente, dans lequel le niveau d'énergie dans le système de stockage est adapté avant l'arrivée sur le tronçon.

Il existe un besoin pour perfectionner encore les procédés de gestion du système d'entraînement d'un véhicule hybride, afin réduire davantage la consommation de carburant.

L'invention y répond grâce à un procédé de gestion du système d'entraînement d'un véhicule hybride comportant un moteur thermique et une machine électrique avec un moyen de stockage d'énergie, le véhicule disposant d'informations sur la topologie d'un tronçon de route futur en descente, procédé dans lequel une prévision d'un besoin de puissance du véhicule est effectuée en fonction du degré de pente dudit tronçon et de la limitation de vitesse dudit tronçon, dans lequel une prévision du mode de fonctionnement du système d'entraînement est également effectuée, ce mode de fonctionnement étant choisi parmi au moins :
- une descente en roue libre,
- une descente assistée par le système d'entraînement, de préférence par la machine électrique seulement,
- une descente freinée par récupération d'énergie,
et dans lequel le niveau d'énergie dans le système de stockage est adapté avant l'arrivée sur le tronçon en fonction de ces prévisions.

Grâce à l'invention, le système d'entraînement peut fonctionner de façon optimisée, y compris pour des situations de pente où la pente reste relativement faible.

De préférence, le moyen de stockage d'énergie est électrochimique.

Dans un exemple de mise en oeuvre du procédé, le mode de fonctionnement prévu est une descente freinée par récupération d'énergie, et le niveau d'énergie dans le moyen de stockage est modifié avant l'arrivée sur le tronçon de telle sorte qu'au sortir du tronçon, le niveau d'énergie dans le moyen de stockage soit plus élevé qu'à l'arrivée sur le tronçon, et de préférence le niveau d'énergie dans le moyen de stockage au sortir du tronçon atteint sa limite haute.

Le niveau d'énergie dans le moyen de stockage peut aussi être augmenté avant l'arrivée sur ledit tronçon. Par exemple, le niveau d'énergie dans le moyen de stockage est augmenté avant d'entamer la descente de telle sorte que le moyen de stockage d'énergie puisse fournir toute l'énergie nécessaire au maintien de la vitesse limite autorisée pour le véhicule durant toute la descente, le mode de fonctionnement étant alors de préférence l'entraînement par le moteur électrique seul.

La prévision du besoin de puissance est de préférence déterminée à partir également de la connaissance de la vitesse limite autorisée pour le véhicule sur ledit tronçon.

De préférence, on cherche à faire en sorte que le niveau d'énergie dans le moyen de stockage évolue entre des limites minimale et maximale lorsque le véhicule parcourt ledit tronçon.

Les informations concernant la topologie peuvent être reçues d'un système de géolocalisation, notamment GPS, et/ou provenir d'autres véhicules.

Le véhicule peut conserver une vitesse constante lorsqu'il parcourt le tronçon de route futur, et les prévisions peuvent être effectuées sur cette base.

L'invention a encore pour objet un système d'entraînement équipé d'un moyen de calcul agencé pour la mise en oeuvre du procédé selon l'invention tel que défini plus haut.

L'invention a encore pour objet un véhicule hybride équipé d'un système d'entraînement selon l'invention

L'invention pourra être mieux comprise à la lecture de la description détaillée qui va suivre, d'un exemple de mise en oeuvre non limitatif de celle-ci, et à l'examen du dessin annexé, sur lequel :
- la figure 1 est un exemple d'algorithme pouvant être mis en oeuvre dans un procédé de gestion du système d'entraînement selon l'invention,
- la figure 2 représente des exemples d'évolution du besoin de puissance en fonction de la vitesse du véhicule et de la pente, et
- les figures 3 et 4 illustrent l'évolution de l'énergie dans le moyen de stockage au cours du temps et en fonction de l'altitude du véhicule, pour deux exemples de topologies de route.

L'invention s'applique à un véhicule hybride comportant un système d'entraînement 10, encore appelé « powertrain » en anglais, ce système d'entraînement comportant un moteur thermique et une machine électrique avec un moyen de stockage d'énergie.

Le moteur thermique délivre un couple qui peut servir à entraîner les roues du véhicule, par l'intermédiaire d'une transmission adaptée. Ce moteur thermique est par exemple un moteur à combustion interne tel qu'un moteur diesel ou à essence, ou un moteur fonctionnant avec d'autres carburants, liquides ou gazeux, tels que l'éthanol ou l'hydrogène, par exemple.

Le moteur électrique peut être un moteur capable de fonctionner de façon réversible en générateur électrique.

Le moyen de stockage peut être électrochimique et/ou à inertie, étant de préférence électrochimique tel qu'une batterie ou un ou plusieurs super condensateurs.

Le véhicule comporte des moyens d'information permettant de disposer de la topologie de la route à venir.

Ces moyens comportent par exemple un récepteur 12 de données de géolocalisation, tel qu'un récepteur GPS. Les données de géolocalisation permettent de connaître la position du véhicule en temps réel et, en interrogeant une source de données de cartographie, la topologie de la route à venir et notamment la présence de pentes, et le degré des pentes. La source de données de cartographie peut être embarquée.

Les données de topologie peuvent également provenir d'autres capteurs 14, notamment dans le cas d'un réseau routier interactif où les véhicules échangent des données entre eux, notamment en se croisant.

La source de données de cartographie peut également renseigner sur la présence éventuelle d'une limitation de vitesse qui amènerait le conducteur à ralentir.

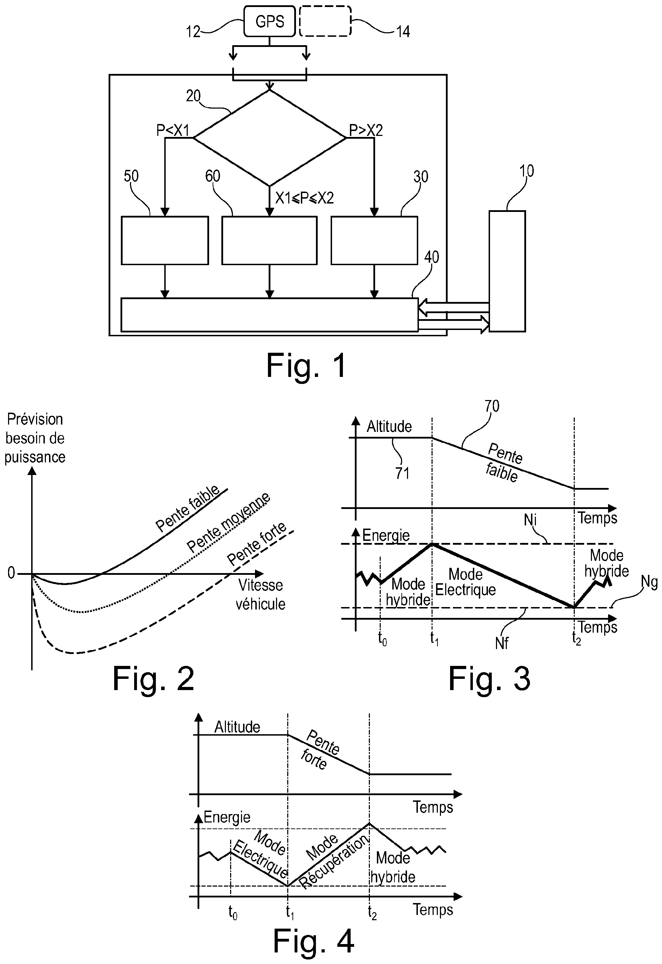

Le véhicule comporte des moyens de calcul 40 tels qu'un circuit électronique de gestion du fonctionnement du système d'entraînement 10, qui détermine à une étape 20 sur l'algorithme de la figure 1, à partir au moins des informations de topologie et de limite de vitesse autorisée, la puissance à fournir pour parcourir le tronçon de route futur en descente.

Les calculs peuvent être effectués sous différentes hypothèses et notamment sous l'hypothèse que la vitesse du véhicule est maintenue égale à la limite de vitesse autorisée, en particulier lorsque la circulation est fluide.

On voit sur la figure 2 que le besoin de puissance est d'autant plus élevé que la vitesse du véhicule est grande. Le besoin de puissance est négatif sur une certaine plage de vitesses qui est d'autant plus étendue que la pente est forte.

Si le besoin de puissance P, compte tenu de la pente et de la vitesse, est supérieur à un seuil x₂, la récupération d'énergie n'est pas possible et le système d'entraînement doit rester moteur, en utilisant de préférence le moteur électrique (mode électrique) comme source motrice, si le niveau d'énergie dans le moyen de stockage le permet, ou à défaut le moteur thermique (mode hybride).

Les moyens de calcul 40 déterminent les commandes à adresser au système d'entraînement 10 en fonction de cette situation 30. En particulier, ils peuvent imposer un fonctionnement en mode électrique ou hybride, durant la descente.

Si le besoin de puissance P est inférieur à un seuil x₁, alors la pente peut être utilisée pour régénérer le moyen de stockage d'énergie et le système d'entraînement 10 est commandé en fonction de cette situation 50. Les moyens de calcul peuvent imposer au système d'entraînement un fonctionnement en mode récupération.

Si le besoin de puissance P se situe entre les deux, c'est-à-dire x₁ ≤ P ≤ x₂, alors le système d'entraînement 10 est commandé en fonction de cette situation 60 pour déconnecter les roues et permettre au véhicule d'évoluer en roue libre.

Le tronçon en descente peut éventuellement se décomposer en plusieurs portions de pentes différentes, au cours desquelles le mode de fonctionnement change.

En fonction du besoin de puissance identifié et mode de fonctionnement retenu, un niveau d'énergie cible à atteindre est également déterminé, par exemple le niveau d'énergie requis pour que le véhicule puisse conserver l'allure prévue sur le tronçon de route en descente.

A partir de la différence entre le niveau d'énergie requis et le niveau d'énergie actuel, il est possible de commencer à adapter le niveau d'énergie dans le moyen de stockage en amont dans des conditions favorables sur le plan du rendement du moteur thermique et/ou pour réaliser une économie de carburant, afin que le niveau dans celui-ci soit optimal au moment où le véhicule entame sa descente.

A titre d'exemple, on va décrire en référence à la figure 3 le cas où le véhicule va parcourir une descente 70 de faible pente, à partir d'un tronçon horizontal 71.

Après avoir évalué le besoin de puissance pour parcourir le tronçon 70 en descente, compte tenu de la vitesse du véhicule prévue, on détermine le niveau d'énergie haut Nᵢ que doit avoir le moyen de stockage pour lui permettre, en déchargeant son énergie jusqu'à un niveau bas N_{g}, de fournir la puissance nécessaire pour vaincre le frottement de l'air et permettre au véhicule de conserver sa vitesse. Le niveau haut Nᵢ peut correspondre à la limite haute du stockage d'énergie et le niveau bas N_{g} à la vitesse basse.

Au moment tₒ où le niveau d'énergie haut Nᵢ est déterminé, le niveau courant d'énergie dans le moyen de stockage est N_{c}, avec N_{c} < Nᵢ.

Il faut donc emmagasiner davantage d'énergie, ce que commence à faire le véhicule à partir de l'instant tₒ pour arriver au niveau d'énergie Nᵢ au début de la descente, à l'instant tᵢ > tₒ.

Une fois la descente parcourue à l'instant t₂, la réserve d'énergie qui a atteint son niveau bas N_{g} dans le moyen de stockage peut à nouveau être reconstituée, le mode de fonctionnement passant par exemple du mode hybride entre tₒ et t₁, au mode électrique entre t₁ et t₂, puis à nouveau au mode hybride à partir de t₂.

Dans l'exemple de la figure 4, la pente est suffisamment forte pour que le besoin de puissance soit négatif. Dans ce cas, le niveau d'énergie dans le moyen de stockage peut être diminué à partir de tₒ avant l'arrivée sur le tronçon en pente à t₁, en fonctionnant en mode électrique. Le niveau d'énergie dans le moyen de stockage peut atteindre à l'instant t₁ la limite basse ou un niveau tel qu'en sortie de descente le moyen de stockage ait fait le plein d'énergie et atteint la limite haute.

Durant la descente, entre t₁ et t₂ le système d'entraînement fonctionne en mode récupération, l'énergie récupérée étant emmagasinée dans le moyen de stockage.

L'invention n'est pas limitée à l'exemple qui vient d'être décrit.

On peut notamment faire intervenir pour déterminer le besoin de puissance et/ou le niveau d'énergie à emmagasiner avant d'aborder une descente, d'autres paramètres tels que les habitudes de conduite du conducteur, ce qui peut permettre de corriger la vitesse attendue pour le véhicule à une valeur autre que la limite autorisée.

L'expression « comportant un » doit être comprise comme étant synonyme de « comprenant au moins un ».

## Revendications

1. Procédé de gestion du système d'entraînement d'un véhicule hybride comportant un moteur thermique et une machine électrique avec un moyen de stockage d'énergie, le véhicule disposant d'informations sur la topologie d'un tronçon de route futur en descente, procédé dans lequel une prévision d'un besoin de puissance du véhicule est effectuée en fonction au moins du degré de pente dudit tronçon, dans lequel une prévision du mode de fonctionnement du système d'entraînement est également effectuée, ce mode de fonctionnement étant choisi au moins parmi :
- une descente en roue libre,
- une descente assistée par le système d'entraînement, de préférence par la machine électrique seulement,
- une descente freinée par récupération d'énergie,
et dans lequel le niveau d'énergie dans le système de stockage est adapté avant l'arrivée sur le tronçon en fonction de ces prévisions.

2. Procédé selon la revendication 1, le moyen de stockage d'énergie étant électrochimique.

3. Procédé selon la revendication 1 ou 2, dans lequel lorsque le mode de fonctionnement prévu est une descente freinée par récupération d'énergie, le niveau d'énergie dans le moyen de stockage est modifié avant l'arrivée sur le tronçon, de telle sorte qu'au sortir du tronçon, le niveau d'énergie dans le moyen de stockage soit plus élevé qu'à l'arrivée sur le tronçon, et de préférence le niveau d'énergie dans le moyen de stockage au sortir du tronçon atteint sa limite haute.

4. Procédé selon l'une des revendications 1 et 2, le niveau d'énergie dans le moyen de stockage étant augmenté avant l'arrivée sur ledit tronçon.

5. Procédé selon la revendication 4, le niveau d'énergie dans le moyen de stockage étant augmenté avant d'entamer la descente de telle sorte que le moyen de stockage d'énergie puisse fournir toute l'énergie nécessaire au maintien de la vitesse limite autorisée pour le véhicule durant toute la descente, le mode de fonctionnement étant de préférence l'entraînement par le moteur électrique seul.

6. Procédé selon l'une quelconque des revendications 1 à 5, la prévision du besoin de puissance étant déterminée à partir également de la connaissance de la vitesse limite autorisée pour le véhicule sur ledit tronçon.

7. Procédé selon l'une quelconque des revendications 1 à 6, dans lequel le niveau d'énergie dans le moyen de stockage évolue entre des limites minimale et maximale lorsque le véhicule parcourt ledit tronçon.

8. Procédé selon l'une quelconque des revendications précédentes, les informations concernant la topologie étant reçues par le véhicule grâce à un système de géolocalisation, notamment GPS, et/ou provenant d'autres véhicules.

9. Procédé selon l'une quelconque des revendications 1 à 8, dans lequel le véhicule conserve une vitesse constante lorsqu'il parcourt le tronçon de route futur.

10. Système d'entraînement équipé d'un moyen de calcul (40) agencé pour la mise en oeuvre du procédé tel que défini à l'une quelconque des revendications 1 à 9.

11. Véhicule hybride équipé d'un système d'entraînement tel que défini à la revendication 10.

## Patentansprüche

1. Verfahren zur Verwaltung des Antriebssystems eines Hybridfahrzeugs, umfassend einen Verbrennungsmotor und eine elektrische Maschine mit einem Energiespeichermittel, wobei das Fahrzeug über Informationen über die Topologie eines zukünftigen abschüssigen Straßenabschnitts verfügt, wobei bei diesem Verfahren eine Vorhersage eines Leistungsbedarfs des Fahrzeugs wenigstens in Abhängigkeit von dem Grad des Gefälles des Abschnitts durchgeführt wird, wobei auch eine Vorhersage des Betriebsmodus des Antriebssystems durchgeführt wird, wobei dieser Betriebsmodus aus wenigstens Folgendem ausgewählt wird:
- einer Abwärtsfahrt im Freilauf,
- einer durch das Antriebssystem, vorzugsweise allein durch die elektrische Maschine, unterstützten Abwärtsfahrt,
- einer durch Rückgewinnung von Energie gebremsten Abwärtsfahrt,
und wobei der Energiepegel in dem Speichersystem vor der Ankunft in dem Abschnitt in Abhängigkeit von diesen Vorhersagen angepasst wird.

2. Verfahren nach Anspruch 1, wobei das Energiespeichermittel elektrochemisch ist.

3. Verfahren nach Anspruch 1 oder 2, wobei, wenn der vorgesehene Betriebsmodus eine durch Rückgewinnung von Energie gebremste Abwärtsfahrt ist, der Energiepegel in dem Speichermittel vor der Ankunft in dem Abschnitt modifiziert wird, so dass beim Verlassen des Abschnitts der Energiepegel in dem Speichermittel höher ist als bei der Ankunft in dem Abschnitt, und wobei vorzugsweise der Energiepegel in dem Speichermittel beim Verlassen des Abschnitts seine Obergrenze erreicht.

4. Verfahren nach einem der Ansprüche 1 und 2, wobei der Energiepegel in dem Speichermittel vor der Ankunft in dem Abschnitt erhöht wird.

5. Verfahren nach Anspruch 4, wobei der Energiepegel in dem Speichermittel erhöht wird, bevor die Abwärtsfahrt begonnen wird, so dass das Energiespeichermittel die gesamte Energie bereitstellen kann, die notwendig ist, um während der gesamten Abwärtsfahrt die für das Fahrzeug zulässige Grenzgeschwindigkeit beizubehalten, wobei der Betriebsmodus vorzugsweise der Antrieb durch den Elektromotor allein ist.

6. Verfahren nach einem der Ansprüche 1 bis 5, wobei die Vorhersage des Leistungsbedarfs auch auf Basis der Kenntnis der für das Fahrzeug auf dem Abschnitt zulässigen Grenzgeschwindigkeit bestimmt wird.

7. Verfahren nach einem der Ansprüche 1 bis 6, wobei sich der Energiepegel in dem Speichermittel zwischen der Mindest- und Höchstgrenze bewegt, wenn das Fahrzeug den Abschnitt befährt.

8. Verfahren nach einem der vorhergehenden Ansprüche, wobei die Informationen betreffend die Topologie durch das Fahrzeug dank eines Geolokalisationssystems, insbesondere GPS, empfangen werden und/oder von anderen Fahrzeugen stammen.

9. Verfahren nach einem der Ansprüche 1 bis 8, wobei das Fahrzeug eine konstante Geschwindigkeit beibehält, wenn es den zukünftigen Straßenabschnitt befährt.

10. Antriebssystem, das mit einem Rechenmittel (40) ausgestattet ist, das für die Ausführung des Verfahrens eingerichtet ist, wie es in einem der Ansprüche 1 bis 9 definiert ist.

11. Hybridfahrzeug, das mit einem Antriebssystem ausgestattet ist, wie es in Anspruch 10 definiert ist.

## Claims

1. Method of managing the drive system of a hybrid vehicle including a thermal engine and an electrical machine with an energy storage means, the vehicle having information on the topology of an upcoming downgrade road section, in which method a power demand of the vehicle is predicted as a function at least of the slope of said section, in which the operating mode of the drive system is also predicted, said operating mode being chosen at least from:
- coasting descent,
- descent assisted by the drive system, preferably by the electrical machine alone,
- descent braked by recovery of energy,
and in which the level of energy in the storage system is adapted before arrival at the section as a function of said predictions.

2. Method according to Claim 1, the energy storage means being electrochemical.

3. Method according to Claim 1 or 2, in which when the predicted operating mode is descent braked by recovery of energy the level of energy in the storage means is modified before arriving at the section so that on leaving the section the level of energy in the storage means is higher than on arriving at the section and the level of energy in the storage means on leaving the section preferably reaches its upper limit.

4. Method according to either one of Claims 1 and 2, the level of energy in the storage means being increased before arrival at said section.

5. Method according to Claim 4, the level of energy in the storage means being increased before commencing the descent so that the energy storage means can supply all the energy necessary for maintaining the authorized limit speed for the vehicle throughout the descent, the operating mode preferably being driving by the electric motor only.

6. Method according to any one of Claims 1 to 5, the power demand being predicted also on the basis of the known limit speed authorized for the vehicle on said section.

7. Method according to any one of Claims 1 to 6, in which the level of energy in the storage means evolves between minimum and maximum limits when the vehicle travels over said section.

8. Method according to any one of the preceding claims, the information concerning the topology being received by the vehicle thanks to a geolocation system, notably a GPS system, and/or from other vehicles.

9. Method according to any one of Claims 1 to 8, in which the vehicle maintains a constant speed when it travels over the upcoming road section.

10. Drive system equipped with a calculation means (40) adapted to implement the method according to any one of Claims 1 to 9.

11. Hybrid vehicle equipped with a drive system according to Claim 10.
